# DEMANDE DE BREVET EUROPEEN

(11) **EP 1 662 772 A1**
(43) Date de publication de la demande: **31.05.2006**
(21) Numéro de dépôt: 05292438.8
(22) Date de dépôt: 17.11.2005
(51) Int. Cl.: H04N 3/15

(54) **Cellule photosensible de type CMOS et matrice de telles cellules photosensibles pour capteur d'image CMOS**

(30) Priorité: 25.11.2004 FR 0412523
(71) Demandeur: CSEM Centre Suisse d'Electronique et de Microtechnique SA Recherche et Développement, 2007 Neuchâtel (CH)
(72) Inventeur: Heim, Pascal, 2024 Saint-Aubin (CH); Ruedi, Pierre-François, 2068 Hauterive (CH)
(74) Mandataire: Bonnet, Michel

(57) **Abrégé**

Cette cellule photosensible est adaptée pour effectuer au moins un cycle de travail consistant au moins en une phase d'exposition à un rayonnement lumineux et au moins une phase de lecture d'une quantité de lumière. Elle comporte :
- un circuit de capture de rayonnement lumineux commandé par des moyens interrupteurs dits d'exposition et comportant un élément photosensible connecté à des moyens d'intégration de photo-courant générateurs d'un signal d'exposition représentatif de la quantité de lumière frappant ledit élément photosensible pendant la phase d'exposition, et à des moyens de mémoire dudit signal d'exposition,
- un circuit de lecture (49) des moyens de mémoire du signal d'exposition commandé par des moyens interrupteurs (50) dits de lecture.

En outre, elle comporte des moyens de détection de maximum du signal d'exposition (55₀, 56₀, 57₀) intégrés au circuit de lecture (49, 50).

## Description

La présente invention concerne, d'une façon générale, les cellules photosensibles de type CMOS destinées à être utilisées à titre de structure de pixel pour l'acquisition d'images. Plus particulièrement, ces cellules comportent une photodiode émettrice d'un photo-courant dont l'intégration sur une capacité est génératrice d'un signal représentatif de la quantité de lumière reçue par la diode. De telles cellules sont en général regroupées de façon matricielle, arrangées selon des lignes et des colonnes adressables, pour former le capteur photosensible d'un imageur CMOS.

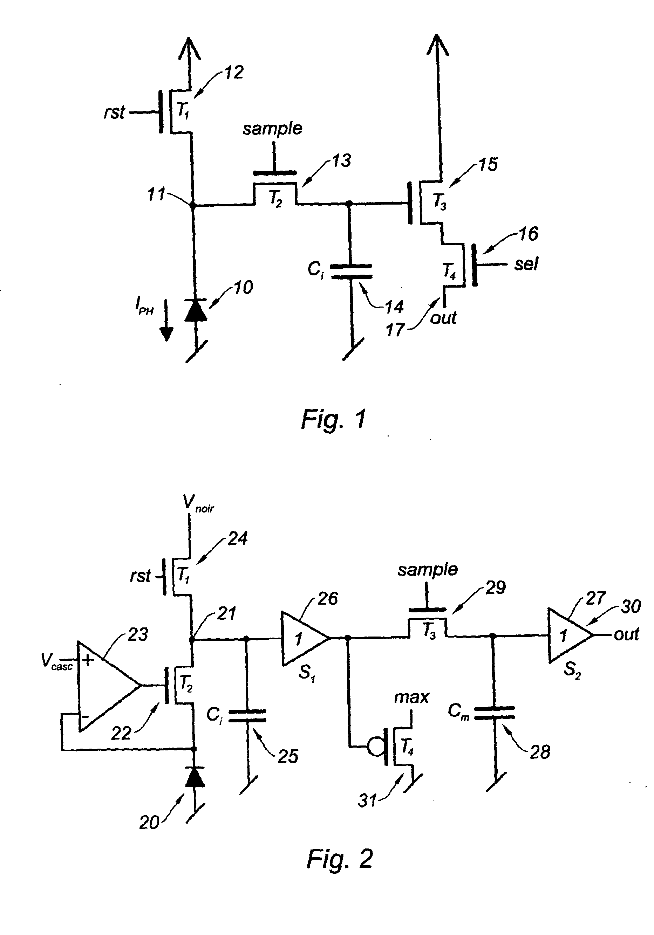

La figure 1 illustre une structure de pixel CMOS à intégration de photo-courant communément utilisée dans un imageur CMOS. Dans cette cellule, une photodiode 10 est connectée par un noeud d'intégration 11, d'une part, à une alimentation positive par un transistor d'initialisation T1 *rst* 12 et ,d'autre part, par un transistor d'exposition T2 *sample* 13, à une capacité d'intégration Ci 14 et à la grille d'un transistor de lecture T3 15, lui-même commandé par un transistor de sélection T4 *sel* 16. Lorsque les signaux de grille *rst* et *sample* sont à l'état haut, la capacité d'intégration Ci 14 est initialisée à une tension proche de l'alimentation positive. Lorsque le signal *rst* passe à l'état bas, le courant I_{PH} collecté par la photodiode est intégré sur la capacité Ci 14 qui n'est, en général, constituée que par des capacités parasites connectées aux noeuds 11 et 18 (principalement, la capacité de grille du transistor 15 et les capacités de jonction de la photodiode 10, du transistor 12 et du transistor 13). L'intégration se termine lorsque le signal *sample* passe à l'état bas, la tension aux bornes de la photodiode étant alors mémorisée sur la capacité 14 pour être lue sur la borne *out* 17 en mettant le signal de grille *sel* à l'état haut.

Cette structure, illustrée à la figure 1, présente l'inconvénient d'intégrer le photo-courant sur une capacité relativement importante d'où il résulte une faible sensibilité. La solution, consistant à augmenter la taille de la photodiode pour maximiser le photo-courant, conduit à une augmentation de la capacité parasite de la photo-diode, d'où un faible gain final en sensibilité.

La figure 2 illustre une autre structure de pixel CMOS connue, dont l'architecture permet de remédier à cet inconvénient de faible sensibilité. Dans cette cellule, la photodiode 20 est connectée au noeud d'intégration 21 par un transistor T2 22, dont la grille est contrôlée par un amplificateur OTA (Operational Transconductor Amplifier) 23 monté en contre-réaction pour former une source de courant cascode permettant de maintenir une tension constante aux bornes de la photodiode. Le noeud d'intégration 21 est connecté, d'une part, à une alimentation positive par un transistor d'initialisation T1 *rst* 24 et, d'autre part, à une capacité d'intégration Ci 25 et à un amplificateur suiveur S1 26 de gain unitaire. L'amplificateur suiveur S1 26 est connecté à un autre amplificateur suiveur S2 27, de gain unitaire, et à une capacité de mémoire Cm 28 par un transistor d'exposition T3 *sample* 29, le signal représentatif de la tension aux bornes de la photodiode étant lu sur la borne *out* 30 en sortie du suiveur S2 27. La cellule illustrée sur la figure 2 comporte de plus une fonction de détection de maximum réalisée à l'aide du transistor MOS de type complémentaire T4 31 dont la grille est reliée à la sortie du suiveur 26, le transistor T4 étant polarisé en courant pour délivrer un signal de tension sur une borne *max* associée à un circuit d'obturateur ou shutter automatique contrôlant le temps d'exposition de la cellule.

Lorsque les signaux de grille *rst* et *sample* sont à l'état haut, les capacités Ci 25 et Cm 28 sont initialisées à la tension de polarisation Vnoir (correspondant à une valeur nulle de la quantité de lumière captée par la photodiode). Lorsque le signal *rst* passe à l'état bas, le photo-courant est intégré sur la capacité Ci 25. Le transistor T2 et l'amplificateur 23 en contre-réaction maintiennent une tension constante aux bornes de la photo-diode, de sorte qu'en première approximation, tout le phot- courant est intégré sur la capacité Ci 25 qui peut être choisie nettement plus petite que la capacité parasite de la jonction de la photo-diode, permettant ainsi d'augmenter la sensibilité du dispositif. Il est à noter toutefois que, pour diminuer Ci , il importe de réaliser le circuit suiveur S1 dans un caisson séparé. Lorsque le signal *sample* passe à l'état bas, la tension aux bornes de la capacité Ci est mémorisée sur la capacité Cm. Le suiveur S2 permet d'appliquer cette tension en entrée d'un quelconque circuit. Il convient de noter que la structure de sortie du pixel, telle celle constituée par les transistors T3 et T4 de la figure 1, pourrait être utilisée en lieu et place de l'amplificateur suiveur S2.

Par ailleurs, il apparaît que les photo-courants collectés dans les imageurs CMOS peuvent varier sur plusieurs ordres de grandeur en fonction des conditions d'illumination. Afin d'utiliser au mieux toute la gamme de tension à disposition pour représenter une image, il est nécessaire d'ajuster le temps d'intégration en fonction des conditions d'illumination. L'approche communément utilisée dans les imageurs CMOS consiste à ajuster le temps d'intégration de façon itérative en fonction du contenu des images précédentes. Une autre approche également connue consiste à mettre en oeuvre une fonction d'obturateur ("shutter") automatique pour contrôler le temps d'intégration dans le but d'éviter la saturation de l'image. Pour ce faire, on détecte l'instant auquel la cellule de pixel la plus rapide (la cellule collectant le photo-courant le plus élevé) atteint un niveau prédéfini (ou niveau de blanc). Un tel obturateur automatique permet d'obtenir une image correcte dès la première exposition, ce qui permet de réduire sensiblement la consommation du dispositif. Dans la cellule illustrée à la figure 2, cette fonction d'obturateur est implémentée à l'aide du transistor T4 31 connecté en suiveur à la sortie du circuit suiveur S1. Toutes les bornes *max* de l'ensemble des cellules de pixel de l'imageur sont connectées ensemble et polarisées par un courant. La tension à ce noeud reflète la tension aux bornes des capacités Ci des cellules collectant les photo-courants les plus élevés. Cette tension peut être comparée à une tension de référence (par exemple une tension Vblanc correspondant au niveau du blanc) afin d'arrêter l'intégration lorsque ce niveau est atteint.

Ainsi, l'amélioration appréciable en matière de sensibilité offerte par la cellule photosensible à source de courant cascode décrite ci-avant en référence à la figure 2 est obtenue au détriment d'une structure complexe, de l'accroissement du nombre de composants CMOS (transistors, amplificateurs, etc) et de l'augmentation correspondante des dimensions d'une cellule de pixel et de la consommation en énergie de cette cellule.

L'invention vise à proposer une cellule photosensible de type CMOS intégrant une fonction d'obturateur automatique tout en évitant une structure complexe.

L'invention a donc pour objet une cellule photosensible de type CMOS adaptée pour effectuer au moins un cycle de travail consistant au moins en une phase d'exposition à un rayonnement lumineux pour détecter une quantité de lumière incidente sur la cellule et au moins une phase de lecture de ladite quantité de lumière pour extraire de la cellule un signal de sortie correspondant, ladite cellule comportant :
- un circuit de capture de rayonnement lumineux commandé par des moyens interrupteurs dits d'exposition et comportant un élément photosensible connecté à des moyens d'intégration de photo-courant générateurs d'un signal d'exposition représentatif de la quantité de lumière frappant ledit élément photosensible pendant la phase d'exposition, et à des moyens de mémoire dudit signal d'exposition,
- un circuit de lecture des moyens de mémoire du signal d'exposition commandé par des moyens interrupteurs dits de lecture,
caractérisée en ce qu'elle comporte des moyens de détection de maximum du signal d'exposition intégrés au circuit de lecture.

Ainsi, une cellule de pixel photosensible selon l'invention, peut être utilisée sans modification ni ajout de composant dans sa structure de base pour implémenter une fonction d'obturateur (ou "shutter") automatique, notamment dans une matrice d'une pluralité de cellules.

Avantageusement les moyens de détection de maximum commandent l'arrêt de la phase d'exposition.

Selon une première variante de la cellule photosensible selon l'invention, les moyens de mémoire comportent au moins une capacité, dite capacité mémoire commandée par les moyens interrupteurs d'exposition.

Avantageusement le circuit de lecture comporte un premier transistor CMOS dont la grille est connectée à la capacité mémoire et dont le chemin drain/source est monté en série sur un deuxième transistor CMOS constituant les moyens interrupteurs de lecture.

Un tel arrangement de structure simple s'intègre aisément dans le circuit de capture selon l'invention et permet d'éliminer également le circuit suiveur S2.

Tout aussi avantageusement, les moyens de détection de maximum du signal d'exposition sont intégrés au circuit de lecture de la première variante par association au chemin drain/source des premier et deuxième transistors CMOS et par mise en mode lecture du transistor CMOS constituant les moyens interrupteurs de lecture pendant la phase d'exposition.

L'invention a également pour but de proposer une cellule photosensible de type CMOS présentant une bonne sensibilité et susceptible de remédier aux ou d'atténuer les inconvénients discutés ci-avant, notamment, une cellule de structure simplifiée permettant de faciliter sa fabrication et son intégration dans un circuit CMOS.

A cette fin, le circuit de capture comporte des moyens pour maintenir une tension constante aux bornes de l'élément photosensible associés à des moyens de polarisation commandés par des moyens interrupteurs dits d'initialisation, les moyens pour maintenir une tension constante comportant un circuit intégrateur disposé entre l'élément photosensible et lesdits moyens de polarisation pour former lesdits moyens générateurs du signal d'exposition.

Selon une deuxième variante de la cellule photosensible selon l'invention, celle-ci comporte un abaisseur de tension entre les moyens de polarisation et l'élément photosensible, plus particulièrement entre les moyens de polarisation et le circuit intégrateur.

Avantageusement les moyens de polarisation comportent une source de courant de polarisation.

Selon un premier mode de réalisation de l'invention, le circuit intégrateur comporte un troisième transistor MOS, monté en source commune, à l'entrée duquel est connecté l'élément photosensible et au moins une capacité d'intégration, montée en contre-réaction entre la sortie et l'entrée dudit troisième transistor MOS. Avantageusement le troisième transistor est connecté en série avec la source du courant de polarisation. Tout aussi avantageusement, l'élément photosensible de la cellule comprend une photodiode ou un phototransistor.

Avantageusement l'abaisseur de tension comporte au moins un quatrième transistor CMOS monté en diode. Ainsi qu'il apparaîtra ci-après, l'abaisseur de tension permet soit de maximiser la plage d'intégration utile pour une tension d'alimentation donnée soit de minimiser la tension d'alimentation pour une plage d'intégration donnée. Ce résultat peut être obtenu par l'ajout d'un seul transistor CMOS sans pour autant nuire à la relative simplicité du circuit de base de la cellule de pixel selon l'invention.

Avantageusement, les moyens interrupteurs d'initialisation sont disposés en parallèle sur la capacité d'intégration.

La cellule selon l'invention peut être utilisée avec profit pour l'acquisition d'image, notamment, comme structure de pixel pour capteur d'image d'un imageur CMOS.

Ainsi qu'il apparaîtra ci-après, l'architecture d'une cellule photosensible telle que décrite précédemment présente, notamment par rapport à la cellule à source de courant cascode de la figure 2, une sensibilité améliorée associée à une implémentation plus compacte, une consommation réduite et un courant de fuite plus faible. En particulier, il est à noter que :
- les deux fonctions du circuit cascode (nécessitant un OTA et un transistor) et du circuit suiveur S1 sont obtenues par un circuit intégrateur utilisant un seul transistor,
- l'élimination du circuit suiveur S1 permet de n'utiliser qu'une seule source de courant au lieu de deux,
- la capacité d'intégration Ci peut être réduite de façon encore plus importante par le fait que la somme des capacités parasites, contribuant à la capacité d'intégration effective, est divisée par le gain très élevé de l'amplificateur en boucle ouverte, et
- le nombre de jonctions N+/substrat connectées au noeud d'intégration passe de 3 à 1.

L'invention concerne également une matrice pour capteur d'image CMOS comportant une pluralité de cellules photosensibles, selon l'invention et telles que définies ci-dessus, arrangées selon des lignes et des colonnes adressables, caractérisée en ce que les circuits de lecture d'au moins une ligne de cellules ou d'au moins une colonne de cellules sont connectés pendant la phase d'exposition à un circuit détecteur émettant en sortie un signal d'arrêt d'exposition vers au moins les cellules de la ligne ou de la colonne correspondante lorsque le signal d'exposition a atteint une valeur maximum de référence.

Selon un premier mode de réalisation de la matrice selon l'invention, les circuits de lecture d'au moins une même ligne de cellules ou d'au moins une même colonne de cellules sont connectés à une des bornes d'entrée de ladite borne de détection d'un circuit comparateur dont l'autre borne est connectée à une référence de tension maximum, ledit comparateur émettant en sortie un signal d'arrêt d'exposition vers au moins les cellules de la ligne ou de la colonne correspondante lorsque le signal d'exposition a atteint la tension maximum. Avantageusement les circuits de lecture d'une même ligne ou d'une même colonne sont polarisés par une source de courant.

Selon une variante avantageuse de la matrice de cellules photosensibles, les moyens interrupteurs de lecture d'une même colonne ou d'une même ligne de cellules sont, de façon croisée aux connexions lignes ou colonnes vers les circuits comparateurs, activés en lecture pendant la phase d'exposition et désactivés avec le signal d'arrêt d'exposition puis réactivés sélectivement colonne par colonne ou ligne par ligne pour lire les signaux d'exposition de chacune des cellules correspondantes.

Selon une autre variante avantageuse, la matrice de cellules photosensibles comporte des moyens de mise hors service de la ligne ou de la colonne de cellules lorsque que la détection du maximum d'un signal d'exposition dans ladite ligne ou ladite cellule a été identifiée comme étant défectueuse, par exemple, pendant la mise en oeuvre des interrupteurs d'initialisation des cellules correspondantes.

Enfin, chaque cellule photosensible de la pluralité de cellules peut constituer la structure d'un pixel.

D'autres caractéristiques et avantages de la présente invention apparaîtront à la lecture de la description qui va suivre présentée uniquement à titre d'exemple non limitatif en référence aux dessins ci-joints dans lesquels:
- la figure 1 représente un schéma de structure d'une première cellule photosensible de l'art antérieur,
- la figure 2 représente un schéma de structure d'une seconde cellule photosensible de l'art antérieur,
- la figure 3 représente un schéma de structure d'un mode de réalisation d'une cellule photosensible selon l'invention,
- la figure 4 représente un schéma de structure d'une variante de la structure de la cellule photosensible de la figure 3,
- la figure 5 représente un schéma de structure d'un circuit d'obturateur ou "shutter" automatique d'une matrice intégrant une pluralité de cellules photosensibles de la figure 3 arrangées en lignes et colonnes et représentées partiellement, et
- la figure 6 représente un chronogramme illustrant le fonctionnement de la matrice de cellules illustrée partiellement à la figure 5.

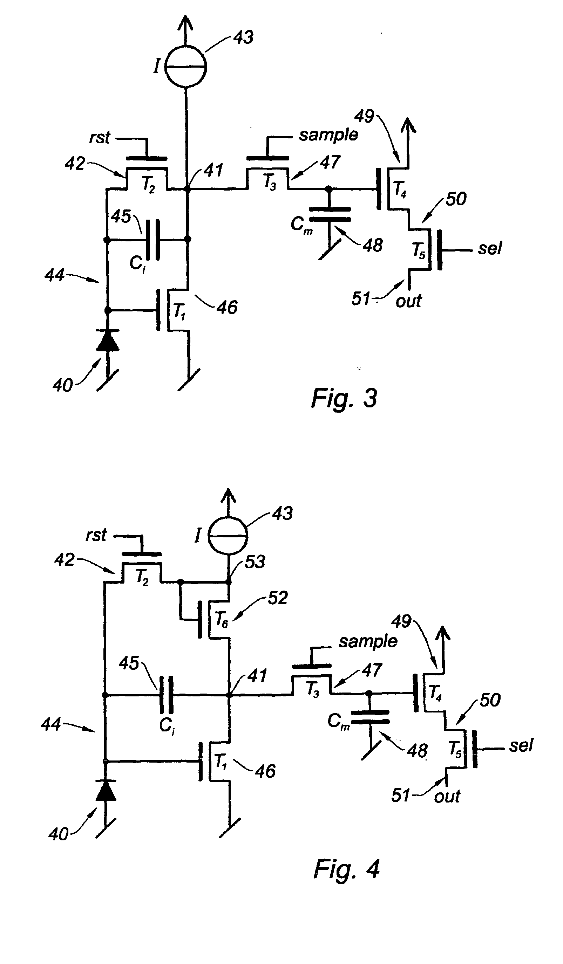

La figure 3 illustre une structure de pixel CMOS à intégration de photo-courant pour capteur d'image d'un imageur CMOS. Dans cette cellule l'élément photosensible est constitué par une photodiode 40 connectée par un transistor CMOS d'initialisation T2 *rst* 42 à un noeud 41 lui-même relié à une source de courant de polarisation I 43. Un circuit intégrateur 44 est disposé entre la sortie de la photodiode 40 et la source de courant 43. Le circuit intégrateur 44 comporte un transistor MOS T1 46 monté en source commune (c'est-à-dire que sa source est à la masse, sa grille constitue une borne d'entrée et son drain constitue une borne de sortie) et une capacité connectée Ci 45 entre son drain et sa grille. La photodiode 40 est connectée entre la masse et la borne d'entrée, la cathode étant alors connectée à la grille de T1. La source du courant de polarisation 43 est montée en série avec le transistor T1 46 entre le noeud 41 et la borne d'alimentation positive du circuit. Le noeud 41 est également relié à un transistor d'exposition CMOS T3 *sample* 47, à une capacité mémoire Cm 48 et à la grille d'un transistor de lecture CMOS T4 49, lui-même commandé par un transistor de sélection CMOS T5 *sel* 50. Ainsi, en association avec la source de courant I 43, le transistor T1 46 et la capacité Ci 45 forment un circuit intégrateur.

A chaque cycle de travail, la cellule de pixel est initialisée au début de la phase d'exposition en mettant les signaux de grille *rst* et *sample* à l'état haut. Dans cette phase, la tension sur la grille du transistor T1 46 monté en diode définit le niveau du noir. Lorsque le signal *rst* passe à l'état bas, au début de la phase d'exposition, le courant I_{PH} délivré par la photodiode est intégré sur la capacité Ci 45. Tant que la source de courant ne désature pas, le circuit intégrateur maintient une tension constante aux bornes de la photodiode 40. La capacité d'intégration totale est constituée de la capacité Ci 45, à laquelle il faut ajouter la capacité parasite connectée à la grille du transistor T1 46 divisée par le gain très élevé de l'amplificateur en boucle ouverte. Lorsque le signal *sample* passe à l'état bas, ce qui correspond à la fin de phase d'exposition, la tension en sortie de l'intégrateur au noeud 41 est mémorisée sur la capacité Cm 48. Cette tension peut être lue sur la borne *out* 51 en mettant le signal de grille *sel* à l'état haut pour rendre passant le transistor T5 50. Une fois la lecture terminée, le signal *sel* est remis à l'état bas, la cellule étant prête pour le cycle de travail suivant.

Dans la cellule de pixel illustrée à la figure 3, le niveau de noir est défini par la tension grille-source du transistor T1 46 de type N monté en diode et polarisé par le courant délivré par la source I 43. Pour un transistor polarisé à un facteur d'inversion proche de 1, cette tension est typiquement de l'ordre de 0, 7 volt dans une technologie CMOS de 0,5 µm. Le niveau maximum du blanc est limité par la tension de pincement du transistor T3 *sample* 47. Dans certains cas d'utilisation, il est intéressant de ramener le niveau du noir aussi près que possible du rail d'alimentation négative pour maximiser la plage d'intégration utile à tension d'alimentation donnée, ou minimiser la tension d'alimentation requise pour une plage d'intégration donnée. La structure de cellule de pixel selon l'invention permet d'obtenir ce résultat sans nuire à la relative simplicité du circuit de base par l'ajout d'un seul transistor CMOS comme présenté ci-après.

En particulier, la variante illustrée à la figure 4 de la cellule de pixel de la figure 3 comporte un agencement abaisseur de tension (du niveau de noir) constitué d'un transistor CMOS T6 52 monté en diode et inséré entre la source de courant 43 et le transistor T1 46. Plus particulièrement le transistor T6 52 est monté entre la source de courant 43 et le noeud 41 et le transistor T2 *rst* 42 reste connecté directement à la source de courant 43 au niveau du noeud 53 prévu entre la source de courant 43 et le transistor T6 52; le reste de la cellule avec la capacité 48 et les transistors 47, 49, 50 étant inchangé par rapport à la cellule illustrée à la figure 3. Ainsi le transistor T6 52 réduit le niveau du noir sur le transistor T1 46 de la tension V_{DS} du transistor T6 52, le facteur d'inversion du transistor T6 52 devant être plus faible que celui du transistor T1 46 pour éviter que le transistor T1 ne soit désaturé durant l'initialisation de la phase d'exposition (remise à zéro de l'intégrateur) avec la mise au niveau haut des signaux de grille *rst* et *sample*.

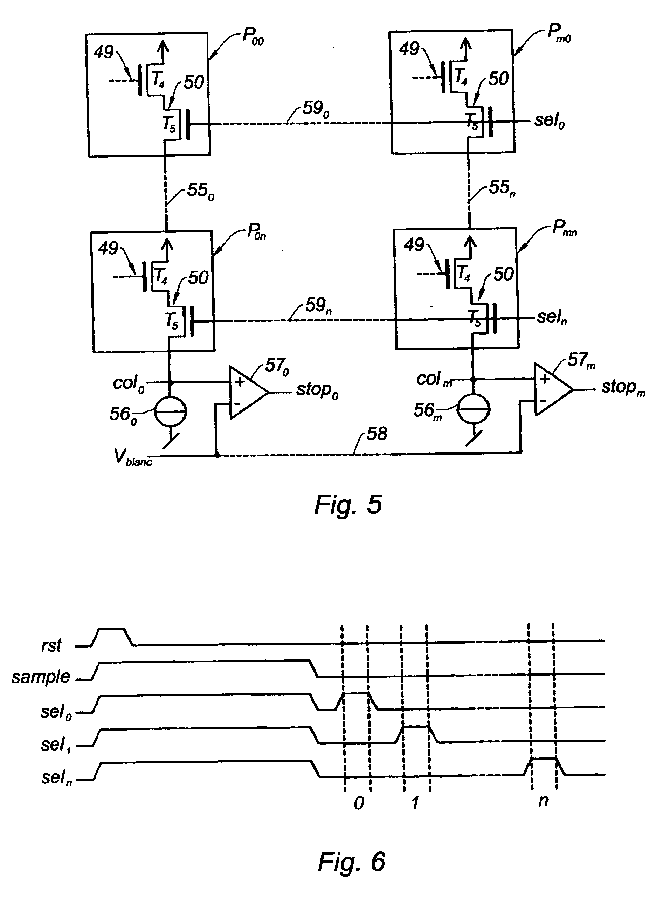

La cellule de pixel décrite en référence à la figure 3 ou sa variante modifiée selon le circuit illustré à la figure 4, est utilisée avec profit pour implémenter une fonction d'obturateur (ou "shutter") automatique sans modification de la structure de base de la structure de pixel. Pour ce faire, la figure 5 montre, de façon partielle, une matrice de cellules de pixel arrangées en lignes et colonnes et dans laquelle chaque cellule de pixel P_{xy} est représentée par son étage de sortie constitué des transistors T4 49 et T5 50. Par convention on posera x = numéro de la colonne allant de 0 à m, et y = numéro de la ligne allant de 0 à n. Pour simplifier le dessin, la figure 5 ne montre que les cellules d'angle P₀₀, Pₘ₀, P₀ₙ et Pₘₙ de l'arrangement matriciel de l'imageur CMOS. Toutes les bornes *out* des pixels d'une même colonne, par exemple des cellules P₀₀ à P₀ₙ pour la colonne 0 et des cellules Pₘ₀ à Pₘₙ pour la colonne m, sont connectées ensemble par une ligne de conduction 55₀ à 55ₘ et polarisées par une même source de courant de I₀ 56₀ à Iₘ 56ₘ. De plus, pour chaque colonne, la tension en sortie de source de courant, *col*_{*0*} à *col*_{*m*}, est comparée dans un comparateur 57₀ à 57ₘ à une tension de référence V_{blanc} donnée par une ligne de conduction 58; chaque comparateur 57₀ à 57ₘ étant susceptible de basculer lorsqu'au moins un pixel de la colonne correspondante a atteint le niveau de référence pour émettre en sortie un signal *stop*_{*0*} *à stop*_{*m*} de commande d'arrêt de la phase d'exposition pour toutes les cellules de la matrice par mise à l'état bas du signal *sample* adressé à toutes les cellules. Par ailleurs, chaque cellule de pixel P_{xy} est adressable en x et y, notamment, pour l'envoi, ponctuel ou groupé, des signaux de commande *rst, sample* et *sel.* En particulier, toutes les grilles des transistors T5 d'une même ligne sont connectées ensemble par des lignes de conduction 59₀ à 59ₙ et commandées simultanément par des signaux de sélection de ligne *sel*_{*0*} à *sel*_{*n*}. Bien entendu, la disposition des connexions croisées colonne/ligne entre les cellules peut être inversée en ligne/colonne par rotation de 90° de la matrice de la figure 5.

Les moyens de détection de maximum implémentant la fonction d'obturateur (ou "shutter") automatique, par exemple 55₀, 56₀, 57₀, tels que décrits en référence à la figure 5 et présentés comme pouvant être ajoutés aux cellules de pixels des figures 3 et 4, peuvent également être ajoutés à la cellule de la figure 1, en les associant à la ligne drain/source des transistors T3 15 et T4 16, ce dernier étant mis en mode lecture pendant la phase d'exposition de la cellule.

La figure 6 représente un chronogramme d'un cycle de fonctionnement de la matrice de cellules illustrée partiellement à la figure 5. Plus particulièrement, la figure 6 montre l'évolution entre les états bas et haut des signaux de commande *rst, sample* et *sel*_{*0*}*, sel*_{*1*} ... *sel*_{*n*} pour un cycle de travail des cellules photosensibles de l'imageur matriciel CMOS. Le cycle débute par l'initialisation de la phase d'exposition des cellules par la mise à l'état haut de tous les signaux *rst, sample* et *sel*_{*0*}*, sel*_{*1*} ... *sel*_{*n*}; ce qui entraîne la remise des capacités Ci et Cm de chaque cellule à la tension initiale correspondante au niveau du noir. L'initialisation se termine par la mise au niveau bas du signal *rst*. La phase d'exposition du cycle de travail se poursuit avec l'intégration des photo-courants pendant laquelle le signal *sample* et les signaux *sel*_{*0*}*, sel*_{*1*} ... *sel*_{*n*} restent à l'état haut. Dans cette configuration, les transistors T5 50 sont à l'état passant pour permettre la lecture en continu des tensions aux bornes *col*_{*0*} *...col*_{*m*}, qui reflètent les tensions des cellules de pixels de la colonne correspondante ayant les photo-courants les plus élevés; soit les pixels les plus proches du niveau du blanc. Dès que le signal de sortie *stop*_{*0*} *.. stop*_{*m*} de l'un des comparateurs 57₀ à 57ₘ bascule, indiquant qu'au moins une cellule de pixel a atteint le niveau de référence, le signal *sample* passe à l'état bas sur toutes les cellules de même que tous les signaux *sel*_{*0*}, *sel*_{*1*} ... *sel*_{*n*} de façon à mémoriser la tension aux bornes de la capacité Cm 48 et sur la grille du transistor T4 49 de chaque cellule P_{xy}.

La phase de lecture des tensions mémorisées se fait en sélectionnant successivement chacune des lignes 0 à n par mises successives à l'état haut des signaux *sel*_{*0*}*, sel*_{*1*} ... *sel*_{*n*} pendant le temps assez court juste nécessaire à la lecture des cellules d'une même ligne comme illustré à la figure 6. La lecture en sortie *out* des transistors T5 50 d'une même ligne se fait au travers de connexions appropriées (non représentées) vers des registres (non représentés) en vue d'une mémorisation globale de l'image ou un traitement ultérieur de celle-ci.

Ainsi les moyens interrupteurs de lecture 50 d'une même colonne (ou d'une même ligne) de cellules sont, de façon croisée aux connexions lignes (ou colonnes) vers les circuits comparateurs 57₀ .. 57ₘ, activés en lecture pendant la phase d'exposition et désactivés avec le signal d'arrêt d'exposition puis réactivés sélectivement colonne par colonne (ou ligne par ligne) pour lire les signaux d'exposition de chacune des cellules correspondantes.

Une variante de l'obturateur ou "shutter" automatique décrit ci-avant comporte une fonction additionnelle de désactivation d'une colonne 'douteuse' en cas de basculement prématuré de son comparateur, notamment pendant l'initialisation des cellules (lors de l'impulsion *rst*), en cas par exemple de court-circuit au niveau d'une cellule de pixel provoquant une réponse quasi-instantanée de celle-ci.

Bien entendu, l'invention n'est pas limitée aux modes de réalisation de cellules de pixel et de matrices d'imageur CMOS décrits en référence aux figures 3 à 6, mais concerne toutes les variantes entrant dans le champ de protection défini par les revendications ci-après, notamment des cellules photosensibles dans lesquelles les photodiodes sont remplacées par des phototransistors.

## Revendications

1. Cellule photosensible de type CMOS adaptée pour effectuer au moins un cycle de travail consistant au moins en une phase d'exposition à un rayonnement lumineux pour détecter une quantité de lumière incidente sur la cellule et au moins une phase de lecture de ladite quantité de lumière pour extraire de la cellule un signal de sortie correspondant, ladite cellule comportant :
- un circuit de capture de rayonnement lumineux commandé par des moyens interrupteurs dits d'exposition (47) et comportant un élément photosensible (40) connecté à des moyens d'intégration (45) de photo-courant générateurs d'un signal d'exposition représentatif de la quantité de lumière frappant ledit élément photosensible (40) pendant la phase d'exposition, et à des moyens de mémoire (48) dudit signal d'exposition,
- un circuit de lecture (49) des moyens de mémoire du signal d'exposition commandé par des moyens interrupteurs dits de lecture (50),
**caractérisée en ce qu'**elle comporte des moyens de détection de maximum du signal d'exposition (55₀,56₀, 57₀) intégrés au circuit de lecture (49, 50).

2. Cellule selon la revendication 1, dans laquelle lesdits moyens de détection (55₀, 56₀, 57₀) commandent l'arrêt de la phase d'exposition.

3. Cellule selon la revendication 1 ou 2, dans laquelle lesdits moyens de mémoire comportent au moins une capacité dite capacité mémoire (48) commandée par lesdits moyens interrupteurs d'exposition (47).

4. Cellule selon la revendication 3, dans laquelle ledit circuit de lecture comporte un premier transistor CMOS (49) dont la grille est connectée à la capacité mémoire (48) et dont le chemin drain/source est monté en série sur un deuxième transistor CMOS (50) constituant lesdits moyens interrupteurs de lecture.

5. Cellule selon la revendication 4, dans laquelle les moyens de détection de maximum (55₀, 56₀, 57₀) sont associés à la ligne drain/source des premier et deuxième transistors CMOS (49 , 50), ce dernier étant mis en mode lecture pendant la phase d'exposition de la cellule.

6. Cellule selon l'une quelconque des revendications 1 à 5, dans laquelle ledit circuit de capture comporte des moyens pour maintenir une tension constante aux bornes de l'élément photosensible associés à des moyens de polarisation (43) commandés par des moyens interrupteurs dits d'initialisation (42), les moyens pour maintenir une tension constante comportant un circuit intégrateur (44) disposé entre l'élément photosensible (40) et lesdits moyens de polarisation (43) pour former lesdits moyens générateurs du signal d'exposition.

7. Cellule selon la revendication 6, comportant un abaisseur de tension entre les moyens de polarisation (43) et ledit circuit intégrateur (44).

8. Cellule selon la revendication 6 ou 7, dans laquelle lesdits moyens de polarisation comportent une source de courant de polarisation (43).

9. Cellule selon la revendication 8, dans laquelle le circuit intégrateur (44) comporte un troisième transistor MOS (46), monté en source commune, à l'entrée duquel est connecté ledit élément photosensible (40) et au moins une capacité d'intégration (45), montée en contre-réaction entre la sortie et l'entrée dudit troisième transistor MOS, ledit troisième transistor étant connecté en série avec ladite source du courant de polarisation (43).

10. Cellule selon les revendications 7 et 9, dans laquelle l'abaisseur de tension comporte au moins un quatrième transistor CMOS (52) monté en diode.

11. Cellule selon la revendication 9 ou 10, dans laquelle lesdits moyens interrupteurs d'initialisation (42) sont disposés en parallèle sur ladite capacité d'intégration (45).

12. Cellule selon l'une quelconque des revendications 1 à 11, dans laquelle ledit élément photosensible comprend une photodiode (40) ou un phototransistor.

13. Cellule selon l'une quelconque des revendications 1 à 12, constituant la structure d'un pixel pour capteur d'image CMOS.

14. Matrice pour capteur d'image CMOS comportant une pluralité de cellules photosensibles (P₀₀, ..., Pₘₙ) selon l'une des revendications 1 à 13 arrangées selon des lignes et des colonnes adressables, **caractérisée en ce que** les circuits de lecture (49, 50) d'au moins une même ligne de cellules ou d'au moins une même colonne de cellules sont connectés pendant la phase d'exposition à un circuit détecteur (55₀, 56₀, 57₀ .. 55ₘ, 56ₘ, 57ₘ) émettant en sortie un signal d'arrêt d'exposition vers au moins les cellules de la ligne ou de la colonne correspondante lorsque le signal d'exposition a atteint une valeur maximum de référence.

15. Matrice selon la revendication 14, dans laquelle les circuits de lecture (49, 50) d'au moins une même ligne de cellules ou d'au moins une même colonne de cellules sont connectés à une des bornes d'entrée, dite borne de détection, d'un circuit comparateur (57₀, ..., 57ₘ) dont l'autre borne est connectée à une référence de tension maximum, ledit comparateur émettant en sortie un signal d'arrêt d'exposition vers au moins les cellules de la ligne ou de la colonne correspondante lorsque le signal d'exposition a atteint la tension maximum.

16. Matrice selon la revendication 14 ou 15, dans laquelle les circuits de lecture d'une même ligne ou d'une même colonne sont polarisés par une source de courant (56₀, ..., 56ₘ).

17. Matrice selon l'une quelconque des revendications 14 à 16, dans laquelle les moyens interrupteurs de lecture (50) d'une même colonne ou d'une même ligne de cellules sont, de façon croisée aux connexions lignes ou colonnes vers les circuits comparateurs (57₀, ..., 57ₘ), activés en lecture pendant la phase d'exposition et désactivés avec le signal d'arrêt d'exposition puis réactivés sélectivement colonne par colonne ou ligne par ligne pour lire les signaux d'exposition de chacune des cellules correspondantes.

18. Matrice selon l'une quelconque des revendications 14 à 17, comportant des moyens de mise hors service de la ligne ou de la colonne de cellules lorsque la détection du maximum d'un signal d'exposition dans ladite ligne ou ladite colonne a été identifiée comme étant défectueuse, par exemple, pendant la mise en oeuvre des interrupteurs d'initialisation des cellules correspondantes.

19. Matrice selon l'une quelconque des revendications 14 à 18, dans laquelle chaque cellule photosensible de la pluralité de cellules constitue la structure d'un pixel.
